# EUROPÄISCHE PATENTSCHRIFT

(11) **EP 0 742 764 B1**
(45) Veröffentlichungstag und Bekanntmachung des Hinweises auf die Patenterteilung: **03.12.1997**
(21) Anmeldenummer: 95905544.3
(22) Anmeldetag: 17.01.1995
(51) Int. Cl.: B60T 8/34, B60T 8/26

(54) **HYDRAULISCHE BREMSANLAGE FÜR EIN KRAFTFAHRZEUG, INSBESONDERE PERSONENKRAFTWAGEN, MIT EINER BLOCKIERSCHUTZEINRICHTUNG**
HYDRAULIC BRAKING SYSTEM FOR A MOTOR VEHICLE, ESPECIALLY A PASSENGER VEHICLE, WITH ANTI-LOCK SYSTEM
SYSTEME DE FREINAGE HYDRAULIQUE POUR VEHICULE AUTOMOBILE, PLUS PARTICULIEREMENT POUR UNE VOITURE PARTICULIERE, AVEC DISPOSITIF D'ANTIBLOCAGE

(30) Priorität: 04.02.1994 DE 4403445
(43) Veröffentlichungstag der Anmeldung: 20.11.1996
(73) Patentinhaber: ROBERT BOSCH GMBH, 70442 Stuttgart (DE)
(72) Erfinder: ZEINER, Peter, D-70565 Stuttgart (DE); KAESS, Hermann, D-71732 Tamm (DE); KLUG, Andreas, D-70192 Stuttgart (DE); BORSIK, Martin, D-71088 Holzgerlingen (DE); HEINSOHN, Rainer, D-71732 Tamm (DE); BREITENBACHER, Jürgen, D-73650 Winterbach (DE)
(86) Internationale Anmeldenummer: DE9500045
(87) Internationale Veröffentlichungsnummer: WO9521079

(56) Entgegenhaltungen:
- WO-A-93/25417
- DE-A- 3 527 019
- DE-A- 3 631 442
- DE-A- 3 742 364
- DE-A- 4 034 688
- RATH H ET AL 'THE CHOICE OF ELECTRONIC ANTI-LOCK SYSTEMS FOR FRONT WHEEL DRIVE CARS' , PROCEEDINGS OF THE INTERNATIONAL SYMPOSIUM ON AUTOMOTIVE TECHNOLOGY AND AUTOMATION (ISATA), FLORENCE, MAY 30 - JUNE 3, 1988, VOL. 2, PAGE(S) 1 - 33 , NUCLEARE E DELLE ENERGIE ALTERNATIVE (ENEA) siehe Seite 5, Absatz 9 - Absatz 10 siehe Seite 6, Absatz 8 - Seite 7, Absatz 2; Abbildungen 4,5,7

## Beschreibung

### Stand der Technik

Die Erfindung geht aus von einer hydraulischen Bremsanlage nach der Gattung des Anspruchs.

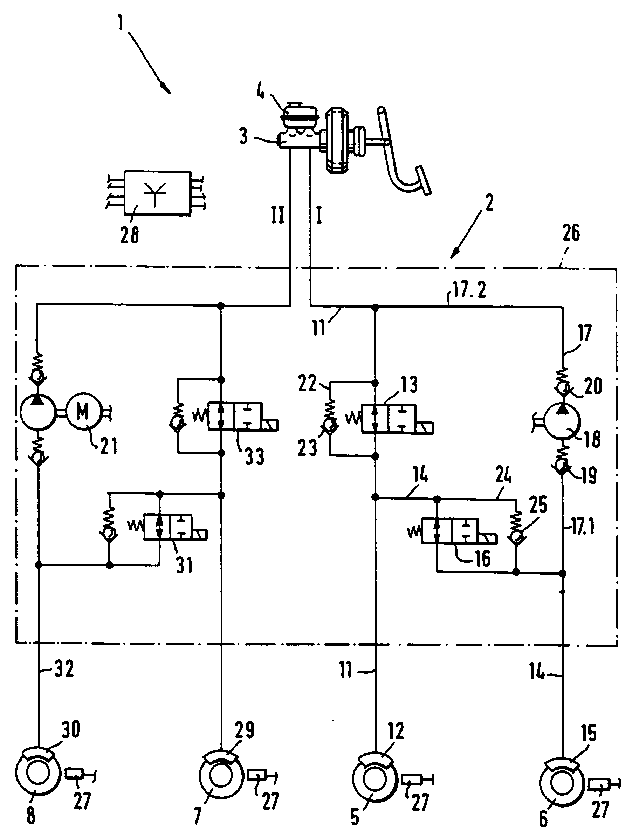

Es ist schon eine solche Bremsanlage bekannt (WO-A-93/25 417, Figur 5), bei welcher das zweite Wegeventil stromlos geschlossen und von einem Differenzdruckbegrenzungsventil mit Durchlaßrichtung vom Hauptbremszylinder zum Radbremszylinder der Hinterachse des Fahrzeugs umgangen ist. Bei funktionstüchtiger Blockierschutzeinrichtung wird das zweite Wegeventil in die Durchlaßstellung geschaltet, und der Bremsdruck wird ungemindert in den Radbremszylinder der Hinterachse eingesteuert. Drohendes Radblockieren wird durch die Blockierschutzeinrichtung vermieden. Ist aber die Blockierschutzeinrichtung ausgefallen, so daß das zweite Wegeventil sperrt, wird Bremsdruck über das Differenzdruckbegrenzungsventil in den Radbremszylinder der Hinterachse eingesteuert. Dies hat aber den Nachteil, daß sich im Bereich niedriger Bremsdrücke, in dem die meisten Bremsungen beim Betrieb des Fahrzeugs erfolgen, keine Bremswirkung an der Hinterachse entfalten kann.

Bei einer anderen Bremsanlage ist das zweite 2/2-Wegeventil in der dritten Leitung angeordnet. (Artikel: Rath, H. et al., 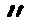 The choice of electronic anti-lock systems for front wheel drive cars"). Es hat eine federbetätigte Sperrstellung und eine elektromagnetisch schaltbare Durchlaßstellung. Durch entsprechende Schaltung der beiden Wegeventile ist mit Hilfe der Pumpe bei Blockierschutzregelbetrieb im jeweiligen Bremskreis eine Bremsdruckmodulation möglich, welche Phasen für Druckabbau, Druckhalten und Druckaufbau in den Radbremszylindern umfaßt. Eine radindividuelle Drucksteuerung ist jedoch aufgrund der Ventilausstattung ausgeschlossen. Außerdem ist zur Erzielung möglichst optimaler Bremswirkung bei unterschiedlichen Beladungszuständen des Fahrzeugs in der Regel ein lastabhängiger Druckminderer in der zum jeweiligen Radbremszylinder der Hinterachse führenden zweiten Leitung erforderlich.

Derartige Bremsanlagen finden Anwendung bei Personenkraftwagen des unteren Preissegments. Diese Kraftfahrzeuge weisen Frontantrieb auf, und ihre den Hinterrädern zugeordneten Radbremsen werden bei einem Bremsvorgang relativ stark entlastet. Die kostengünstige bekannte Bremsanlage wird in dieser Fahrzeugklasse nicht allen Anforderungen gerecht.

### Vorteile der Erfindung

Die erfindungsgemäße hydraulische Bremsanlage mit den kennzeichnenden Merkmalen des Anspruchs hat demgegenüber den Vorteil, daß die bei der Bremsanlage gemaß WO-A-93/25 417, Figur 5 auftretenden Mängel vermieden werden. Darüber hinaus ist bei einer Störung des dem Radbremszylinder der Hinterachse zugeordneten zweiten 2/2-Wegeventils ein Bremsdruckabbau in diesem Radbremszylinder bis auf eine unschädliche Restdruckhöhe möglich.

### Zeichnung

Ein Ausführungsbeispiel der Erfindung ist in der Zeichnung anhand eines Schaltschemas einer hydraulischen Bremsanlage mit Blockierschutzeinrichtung dargestellt.

### Beschreibung des Ausführungsbeispiels

Eine in der Zeichnung schematisch dargestellte hydraulische Bremsanlage 1 ist zur Verwendung in frontangetriebenen Personenkraftwagen mit diagonaler Bremskreisaufteilung bestimmt. Die Bremsanlage 1 ist mit einer Blockierschutzeinrichtung 2 ausgestattet. Die Bremsanlage 1 hat einen zweikreisigen, pedalbetätigbaren Hauptbremszylinder 3 mit einem Druckmittel-Vorratsbehälter 4. Ein erster Bremskreis I ist zur Betätigung von Radbremsen 5 und 6 bestimmt, welche dem linken Vorderrad und dem rechten Hinterrad des Fahrzeugs zugeordnet sind. An einen zweiten Bremskreis II sind die Radbremsen 7 und 8 des rechten Vorderrades und des linken Hinterrades angeschlossen. Beide Bremskreise I und II sind gleich ausgestattet. Nachstehend wird daher der Bremskreis I näher beschrieben.

Im Bremskreis I führt eine erste Leitung 11 vom Hauptbremszylinder 3 zu einem Radbremszylinder 12 der dem linken Vorderrad zugeordneten Radbremse 5. In der ersten Leitung 11 befindet sich ein erstes 2/2-Wegeventil 13. Dieses nimmt federbetätigt seine Durchlaßstellung und elektromagnetbetatigt seine Sperrstellung ein. Von der ersten Leitung 11 geht zwischen dem ersten Wegeventil 13 und dem Radbremszylinder 12 eine zweite Leitung 14 aus, an welche ein Radbremszylinder 15 der dem rechten Hinterrad zugeordneten Radbremse 6 angeschlossen ist. In der zweiten Leitung 14 befindet sich ein zweites 2/2-Wegeventil 16 mit federbetätigter Durchlaßstellung und elektromagnetisch schaltbarer Sperrstellung.

Außerdem ist eine dritte Leitung 17 mit einer Pumpe 18 zum Fördern von Druckmittel aus den Radbremszylindern 12 und 15 zum Hauptbremszylinder 3 vorgesehen. Der zur Saugseite der Pumpe 18 führende Teil 17.1 der dritten Leitung 17 ist zwischen dem zweiten Wegeventil 16 und dem Radbremszylinder 15 an die zweite Leitung 14 angeschlossen. Der druckseitige Teil 17.2 der dritten Leitung 17 steht mit der ersten Leitung 11 zwischen dem ersten Wegeventil 13 und dem Hauptbremszylinder 3 in Verbindung. Saug- und druckseitig der Pumpe 18 befinden sich in der dritten Leitung 17 Rückschlagventile 19 und 20, welche eine Druckmittelströmung vom Hauptbremszylinder 3 zu den Radbremszylindern 12, 15 durch die dritte Leitung 17 unterbinden. Die Rückschlagventile 19 und 20 können in die Pumpe 18 integriert sein. Die Pumpe 18 ist mit einem beiden Bremskreisen I und II gemeinsamen elektrischen Antriebsmotor 21 antreibbar. Das erste Wegeventil 13 ist von einer vierten Leitung 22 umgangen. In dieser ist ein Rückschlagventil 23 mit Durchlaßrichtung vom Radbremszylinder 12 zum Hauptbremszylinder 3 angeordnet. Außerdem ist noch eine fünfte Leitung 24 vorgesehen, welche das zweite Wegeventil 16 umgeht. In dieser Leitung 24 befindet sich ebenfalls ein Rückschlagventil 25 mit Durchlaßrichtung vom Radbremszylinder 15 zum Hauptbremszylinder 3. Weitere hydraulische Elemente enthalten die Bremskreise I und II der Bremsanlage 1 nicht. Die genannten Elemente sind in einem Hydroaggregat 26 vereinigt, was in der Zeichnung durch eine strichpunktierte Umrandung angedeutet ist.

Schließlich gehören zur Blockierschutzeinrichtung 2 noch den Fahrzeugrädern zugeordnete Raddrehungssensoren 27, welche an ein elektronisches Steuergerät 28 angeschlossen sind. Das Steuergerät 28 ist zum schlupfabhängigen Schalten der Wegeventile 13 und 16 sowie des Pumpen-Antriebsmotors 21 bestimmt.

Die Bremsanlage 1 hat folgende Wirkungsweise:

Bei einer Bremsung wird Bremsdruck in den Radbremszylindern 12 und 15 des Bremskreises I aufgebaut. Das gleiche erfolgt in Bremskreis II in den Radbremszylindern 29 und 30, welche der Radbremse 7 des rechten Vorderrades bzw. der Radbremse 8 des linken Hinterrades zugeordnet sind. In Abhängigkeit von der dynamischen Achslastverlagerung treten an den Rädern der Vorderachse höhere Bremskräfte als an der Hinterachse auf.

Diese führen bezüglich der effektiven Fahrzeuggeschwindigkeit zu unterschiedlichem Schlupf an den Rädern der Vorderachse und den Rädern der Hinterachse bzw. zu unterschiedlichen Radumfangsgeschwindigkeiten zwischen den Rädern der beiden Achsen. Dieses Verhalten wird vom elektronischen Steuergerät 28 anhand der Signale der Raddrehungssensoren 27 überwacht. Erkennt das Steuergerät 28 eine zu große Schlupf- bzw. Geschwindigkeitsdifferenz zwischen den Rädern beider Achsen, so schaltet es die zweiten 2/2-Wegeventile 16 im Bremskreis I und 31 in Bremskreis II in die Sperrstellung, so daß ein weiterer Bremsdruckaufbau an der Hinterachse unterbunden wird. Durch entsprechendes Zurückhalten des Druckes an den Radbremszylindern 15 und 30 der Hinterachse wird wahrend der Bremsung die Bremskraft dem Verlauf der idealen Bremskraftverteilung angeglichen. Ein Druckminderer in den zu den Radbremszylindern 15 und 30 der Hinterachse führenden zweiten Leitung 14 im Bremskreis I und 32 im Bremskreis II ist daher entbehrlich.

Tritt bei einer Bremsung Blockiergefahr beispielsweise am rechten Hinterrad auf, so arbeitet die Blockierschutzeinrichtung 2 wie folgt:

Das Steuergerät 28 sperrt mit Hilfe des zweiten Wegeventils 16 die zweite Leitung 14 und setzt die Pumpe 18 in Betrieb. Diese bewirkt durch Entnahme von Druckmittel aus dem Radbremszylinder 15 des Bremskreises I einen Druckabbau an der Radbremse 6. Um den Bremsdruck bei sich stabilisierendem Raddrehverhalten wieder anzuheben, schaltet das Steuergerät 28 das zweite Wegeventil 16 in die Durchlaßstellung, so daß Druckmittel bei laufender Pumpe 18 vom Hauptbremszylinder 3 zum Radbremszylinder 15 nachströmen kann.

Bei während einer Bremsung am linken Vorderrad auftretender Blockiergefahr werden folgende Maßnahmen getroffen: Für Bremsdruckabbau wird das erste Wegeventil 13 in Bremskreis I geschlossen und die Pumpe 18 in Betrieb gesetzt. Diese fördert Druckmittel aus beiden Radbremszylindern 12 und 15 des Bremskreises I zum Hauptbremszylinder 3. Für erneuten Druckaufbau an beiden Radbremsen 5 und 6 wird das erste Wegeventil 13 in die Durchlaßstellung überführt, und es strömt bei weiterhin fördernder Pumpe 18 Druckmittel vom Hauptbremszylinder 3 zu den Radbremszylindern 12 und 15.

Mit der Blockierschutzeinrichtung 2 ist es möglich, während des Druckabbaus an der Hinterachse bei sperrenden zweiten Wegeventilen 16 und 31 einen gleichzeitigen Druckaufbau an der Vorderachse durch Druckmittelzufuhr vom Hauptbremszylinder 3 durch in Durchlaßstellung geschaltete erste Wegeventile 13 im Bremskreis I und 33 im Bremskreis II zu den Radbremszylindern 12 und 29 der Vorderachse zu erzielen. Während dieses Druckabbaus an der Hinterachse kann durch Überführen der ersten Wegeventile 13 und 33 in die Sperrstellung auch der Druck an der Vorderachse aufrechterhalten werden. Diese Maßnahmen können bei bestimmten Fahrbahnzuständen, z. B. bei sprunghafter Änderung des Reibbeiwerts, Verbesserungen der Bremswirkung bringen.

## Patentansprüche

1. Hydraulische Bremsanlage (1) eines Kraftfahrzeugs, insbesondere eines Personenkraftwagens,
mit zwei diagonalen Bremskreisen (I, II) und mit einer Blockierschutzeinrichtung (2),
mit einem zweikreisigen Hauptbremszylinder (3), mit einer im jeweiligen Bremskreis (I; II) vom Hauptbremszylinder (3) zum Radbremszylinder (12) der Vorderachse des Fahrzeugs führenden ersten Leitung (11),
mit einem federbetätigt offenen, elektromagnetisch schaltbaren ersten 2/2-Wegeventil (13) der Blockierschutzeinrichtung (2) in der ersten Leitung (11),
mit einer von der ersten Leitung (11) zwischen dem ersten 2/2-Wegeventil (13) und dem Radbremszylinder (12) der Vorderachse ausgehenden, zu einem Radbremszylinder (15) der Hinterachse des Fahrzeugs führenden zweiten Leitung (14),
mit einem elektromagnetischen zweiten 2/2-Wegeventil (16) der Blockierschutzeinrichtung (2) in der zweiten Leitung (14) des jeweiligen Bremskreises (I; II),
mit einer einerseits an die zweite Leitung (14) und andererseits zwischen dem ersten 2/2-Wegeventil (13) und dem Hauptbremszylinder (3) an die erste Leitung (11) angeschlossenen dritten Leitung (17), in der eine Druckmittel aus den Radbremszylindern (12, 15) zum Hauptbremszylinder (3) fördernde Pumpe (18) der Blockierschutzeinrichtung (2) angeordnet ist,
wobei der Radbremszylinder (15) der Hinterachse des Fahrzeugs durch einen zwischen dem zweiten 2/2-Wegeventil (16) und dem Radbremszylinder (15) der Hinterachse an die zweite Leitung (14) angeschlossenen Teil (17.1) der dritten Leitung (17) unmittelbar mit der Saugseite der Pumpe (18) verbunden ist,
mit einer vierten, das erste 2/2-Wegeventil (13) in der ersten Leitung (11) umgehenden Leitung (22), in der ein Rückschlagventil (23) mit Durchlaßrichtung vom Radbremszylinder (12) der Vorderachse zum Hauptbremszylinder (3) angeordnet ist, sowie mit einem elektronischen Steuergerät (28) der Blockierschutzeinrichtung (2) zum schlupfabhängigen Schalten der Wegeventile (13, 16) und des Pumpenantriebs (21),
gekennzeichnet durch die folgenden Merkmale:
- in der zweiten Leitung (14) ist ausschließlich das zweite 2/2-Wegeventil (16) mit einem zum Radbremszylinder (12) der Vorderachse öffnenden Rückschlagventil (25) in Parallelschaltung aufgenommen,
- das zweite 2/2-Wegeventil (16) nimmt federbetätigt seine Durchlaßstellung und elektromagnetbetätigt seine Sperrstellung ein, so daß im stromlosen Zustand des ersten und zweiten 2/2-Wegeventils (13, 16) immer eine druckmittelleitende Verbindung zwischen dem Hauptbremszylinder (3) und dem Radbremszylinder (15) der Hinterachse des Fahrzeugs besteht.

## Claims

1. Hydraulic brake system (1) of a motor vehicle, in particular of a passenger car,
having two diagonal brake circuits (I, II) and having an anti-lock device (2),
having a dual-circuit master brake cylinder (3), having a first line (11) which leads in the respective brake circuit (I; II) from the master brake cylinder (3) to the wheel brake cylinder (12) of the front axle of the vehicle,
having an electromagnetically switchable first 2/2-way valve (13), which is open under spring activation, of the anti-lock device (2) in the first line (11),
having a second line (14) which starts from the first line (11) between the first 2/2-way valve (13) and the wheel brake cylinder (12) of the front axle and leads to a wheel brake cylinder (15) of the rear axle of the vehicle,
having an electromagnetic, second 2/2-way valve (16) of the anti-lock device (2) in the second line (14) of the respective brake circuit (I; II),
having a third line (17) which is connected at one end to the second line (14) and at the other end to the first line (11) between the first 2/2-way valve (13) and the master brake cylinder (3), in which third line (17) a pump (18), which feeds pressure medium from the wheel brake cylinders (12, 15) to the master brake cylinder (3), of the anti-lock device (2) is arranged, the wheel brake cylinder (15) of the rear axle of the vehicle being directly connected to the inlet side of the pump (18) by means of a component (17.1), connected to the second line (14) between the second 2/2-way valve (16) and the wheel brake cylinder (15) of the rear axle, of the third line (17),
having a fourth line (22), which bypasses the first 2/2-way valve (13) in the first line (11) and in which a non-return valve (23) with flow direction from the wheel brake cylinder (12) of the front axle to the master brake cylinder (3) is arranged, and having an electronic control unit (28) of the anti-lock device (2) for slip-dependent switching of the directional control valves (13, 16) and of the pump drive (21), characterized by the following features:
- solely the second 2/2-way valve (16) is accommodated in the second line (14), in a parallel connection with a non-return valve (25) which opens towards the wheel brake cylinder (12) of the front axle,
- the second 2/2-way valve (16) assumes its flow position under spring activation and assumes its blocking position under electromagnetic activation, so that, in the non-energized state of the first and second 2/2-way valves (13, 16) there is always a pressure medium-conducting connection between the master brake cylinder (3) and the wheel brake cylinder (15) of the rear axle of the vehicle.

## Revendications

1. Installation de frein hydraulique (1) pour véhicule, notamment véhicule de tourisme comprenant
• deux circuits de frein (I, II) en diagonale et un dispositif antiblocage (2),
• un maître-cylindre de frein (3) à deux circuits, avec une première conduite (11) dans chaque circuit de frein (I, II) allant du maître-cylindre de frein (3) vers le cylindre de frein (12) de l'essieu avant du véhicule,
• un premier distributeur à 2/2 voies (13), actionné par ressort dans le sens de l'ouverture et par un électroaimant dans le sens de la fermeture du dispositif de blocage (2) dans la première conduite (11),
• une seconde conduite (14) allant de la première conduite (11) entre le premier distributeur à 2/2 voies (13) et le cylindre de frein de roue (12) de l'essieu avant, vers un cylindre de frein de roue (15) de l'essieu arrière du véhicule,
• un second distributeur à 2/2 voies (16) électromagnétique appartenant au dispositif antiblocage (2) dans la seconde conduite (14) de chacun des circuits de frein (I, II),
• une troisième conduite (17) reliée par une extrémité à la seconde conduite (14) et par l'autre extrémité à la première conduite (11) entre le premier distributeur à 2/2 voies (13) et le maître-cylindre de frein (3), cette conduite étant équipée de la pompe (18) du dispositif antiblocage (2) qui fait passer du fluide sous pression des cylindres de frein de roue (12, 15) vers le maître-cylindre de frein (3),
• le cylindre de frein de roue (15) de l'essieu arrière du véhicule étant relié par une partie (17.1) de la troisième conduite (17) entre le second distributeur à 2/2 voies (16) et le cylindre de frein de roue (15) de l'essieu arrière à la seconde conduite (14), directement au côté aspiration de la pompe (18),
• une quatrième conduite (22) contournant le premier distributeur à 2/2 voies (13) de la première conduite (11), dans laquelle est monté un clapet antiretour (23) dont le sens passant va du cylindre de frein de roue (12) de l'essieu arrière vers le maître-cylindre de frein (3),
• ainsi qu'un appareil de commande électronique (28) du dispositif antiblocage (2) pour commuter les distributeurs (13, 16) et l'entraînement de pompe (21) en fonction du patinage,
caractérisée par les points suivants :
• la seconde conduite (14) comporte exclusivement le second distributeur à 2/2 voies (16) en branchement en parallèle par rapport au cylindre de frein de roue (12) du clapet antiretour (25) s'ouvrant vers l'essieu avant,
• le second distributeur à 2/2 voies (16) vient en position passante sous l'effet d'un ressort et en position de blocage sous la commande d'un électroaimant pour qu'à l'état de courant coupé pour le premier et le second distributeur à 2/2 voies (13, 16), il existe toujours une liaison de fluide sous pression entre le maître-cylindre de frein de roue (3) et le cylindre de frein de roue (15) de l'essieu arrière du véhicule.
